# EUROPEAN PATENT SPECIFICATION

(11) **EP 2 243 685 B1**
(45) Date of publication and mention of the grant of the patent: **20.03.2013**
(21) Application number: 10160305.8
(22) Date of filing: 19.04.2010
(51) Int. Cl.: B62D 5/04, B62D 6/10

(54) **Electric power steering system**
Elektrische Servolenkung
Système d'assistance électrique de direction

(30) Priority: 20.04.2009 JP 2009102128
(43) Date of publication of application: 27.10.2010
(73) Proprietor: JTEKT CORPORATION, Osaka-shi Osaka 542-8502 (JP)
(72) Inventor: Kawada, Yoshikazu, Osaka-shi, Osaka 542-8502 (JP); Nakajima, Terukazu, Osaka-shi, Osaka 542-8502 (JP)
(74) Representative: TBK

(56) References cited:
- WO-A1-2010/013490
- JP-A- 2008 184 043
- US-A1- 2002 029 923

## Description

### BACKGROUND OF THE INVENTION

### 1. Field of the Invention

The invention relates to an electric power steering system according to the preamble of claim 1, the features of which are known from document US 2002/0029923 A1.

### 2. Description of the Related Art

An electric power steering system serves as a steering assist mechanism, and includes a torque sensor that detects steering torque, an electric motor that generates steering assist force, and a speed reduction mechanism that reduces the speed of rotation output from the electric motor (refer to, for example, Japanese Patent Application Publication No. 2007-191055 (JP-A-2007-191055)).
JP-A-2007-191055 describes an electric power steering system that includes a column tube that rotatably supports a steering shaft, a torque sensor module, and a gear housing that houses a speed reduction mechanism.

### SUMMARY OF THE INVENTION

It is an object of the invention to provide an inexpensive and compact electric power steering system.

This object is achieved by an electric power stering system exhibiting the features characterised in independent claim 1.

An aspect of the invention relates to an electric power steering system, including a steering shaft, a sensor housing, a torque sensor, a speed reduction mechanism, and a gear housing. The steering shaft is connected to a steering member. The sensor housing has a cylindrical shape. The torque sensor is housed in the sensor housing, and detects steering torque. The speed reduction mechanism is used to transmit rotation of an electric motor for steering assistance to the steering shaft, and includes a wheel fitted to the steering shaft. The gear housing houses the speed reduction mechanism. The gear housing rotatably supports the steering shaft via an upper bearing and a lower bearing that are arranged above and below the wheel, respectively. The gear housing has a cylindrical lower housing that rotatably supports the steering shaft via the lower bearing, and an upper housing. The upper housing has an inner cylinder, an outer cylinder, and an annular connection wall that connects the inner cylinder and the outer cylinder to each other. The outer cylinder is press-fitted to an inner periphery of an upper portion of the lower housing. The inner cylinder rotatably supports the steering shaft via the upper bearing. The sensor housing has a first cylindrical portion that has an inner periphery to which the torque sensor is fitted, and a second cylindrical portion that is formed at a lower end portion of the sensor housing and that is larger in diameter than the first cylindrical portion. The inner cylinder of the upper housing is press-fitted to an inner periphery of the second cylindrical portion.

### BRIEF DESCRIPTION OF THE DRAWINGS

The foregoing and further features and advantages of the invention will become apparent from the following description of an example embodiment with reference to the accompanying drawings, wherein like numerals are used to represent like elements and wherein:
FIG 1 is a view schematically showing the structure of an electric power steering system according to an embodiment of the invention;
FIG 2 is a cross-sectional view of a main portion of the electric power steering system in FIG. 1;
FIG 3 is an enlarged view of the main portion in FIG 2;
FIG 4 is an enlarged view of a section A4 shown in FIG 3;
FIG 5 is an exploded view of the main portion shown in FIG 3; and
FIG 6 is an exploded view of the main portion shown in FIG 3, showing the state in the process of assembly.

### DETAILED DESCRIPTION OF THE EMBODIMENT

Hereafter, an embodiment of the invention will be described in detail with reference to the accompanying drawings.

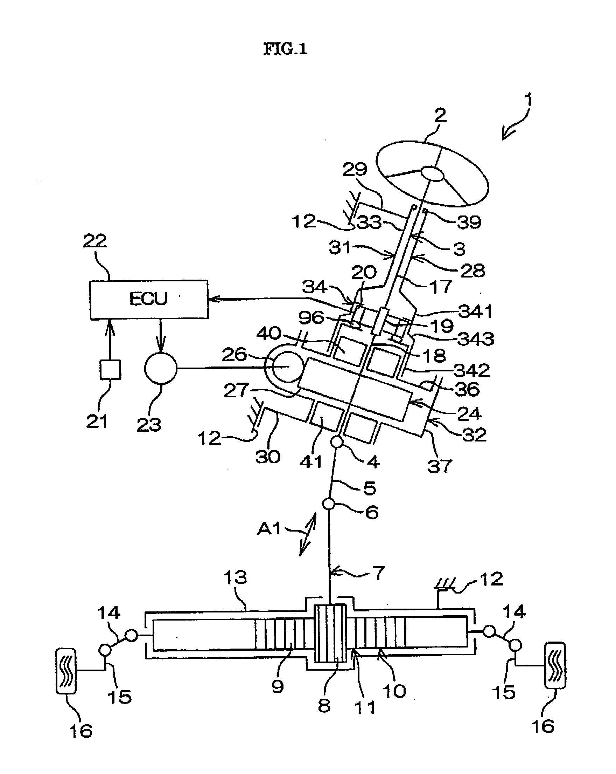

FIG 1 is a view schematically showing the structure of an electric power steering system according to an embodiment of the invention. As shown in FIG 1, an electric power steering system (EPS) 1 includes a steering shaft 3, an intermediate shaft 5, a pinion shaft 7, and a rack shaft 10. The steering shaft 3 is connected to a steering member 2, for example, a steering wheel. The intermediate shaft 5 is connected to the steering shaft 3 via a universal joint 4. The pinion shaft 7 is connected to the intermediate shaft 5 via a universal joint 6. The rack shaft 10 has a rack 9 that meshes with a pinion 8 that is provided at an end portion of the pinion shaft 7. The rack shaft 10 is a steered shaft that extends in the lateral direction of a vehicle.

A steering mechanism 11 is formed of a rack-and-pinion mechanism that includes the pinion shaft 7 and the rack shaft 10. The rack shaft 10 is supported by a rack housing 13 fixed to a vehicle body 12, via a plurality of bearings (not shown), in such a manner that the rack shaft 10 is able to linearly reciprocate. Paired tie rods 14 are connected to the rack shaft 10. The tie rods 14 are connected to corresponding steered wheels 16 via corresponding knuckle arms 15.
When the steering shaft 3 is rotated in response to an operation of the steering member 2, the rotation of the steering shaft 3 is converted into linear motion of the rack shaft 10 along the lateral direction of the vehicle by the pinion 8 and the rack 9. Thus, the steered wheels 16 are steered.

The steering shaft 3 is divided into an input shaft 17 that is connected to the steering member 2 and an output shaft 18 that is connected to the pinion shaft 7. The input shaft 17 and the output shaft 18 are coaxially connected to each other via a torsion bar 19. When steering torque is input in the input shaft 17, the torsion bar 19 is elastically and torsionally deformed. As a result, the input shaft 17 and the output shaft 18 rotate relative to each other.

A torque sensor 20 is provided at a position that is near the torsion bar 19 and that is on the outer side of the steering shaft 3 in the radial direction. The torque sensor 20 detects steering torque based on the amount of relative rotation between the input shaft 17 and the output shaft 18 that is caused via the torsion bar 19. The electric power steering system 1 includes a vehicle speed sensor 21. In addition, the electric power steering system 1 includes an Electronic Control Unit (ECU) 22 that serves as a control unit. Further, the electric power steering system 1 includes an electric motor 23 that generates steering assist force, and a speed reduction mechanism 24 that reduces the speed of rotation output from the electric motor 23.

Detection signals from the torque sensor 20 and the vehicle speed sensor 21 are input into the ECU 22. Based on, for example, the detected torque and the detected vehicle speed, the ECU 22 controls the electric motor 23 for steering assistance. The speed of rotation output from the electric motor 23 is reduced by the speed reduction mechanism 24 and the rotation having the reduced speed is transmitted to the pinion shaft 7. Then, the rotation is converted into linear motion of the rack shaft 10. As a result, a steering operation is assisted.

The speed reduction mechanism 24 transmits the rotation output from the electric motor 23 for steering assistance to the output shaft 18 of the steering shaft 3. The speed reduction mechanism 24 includes a worm 26 that serves as a drive gear, and a worm wheel 27 that meshes with the worm 26 and that serves as a driven gear.
The worm 26 is arranged concentrically with an output shaft (not shown) of the electric motor 23, and is rotated by the electric motor 23.
The worm wheel 27 is connected to the output shaft 18 of the steering shaft 3 in such a manner that the worm wheel 27 rotates together with the output shaft 18 and is immovable in the axial direction A1 of the steering shaft 3 (hereinafter, simply referred to as "axial direction A1" where appropriate).

In addition, the electric power steering system 1 includes a steering column 28 that rotatably supports the steering shaft 3. The steering column 28 is supported by the vehicle body 12 via a first bracket 29 and a second bracket 30.

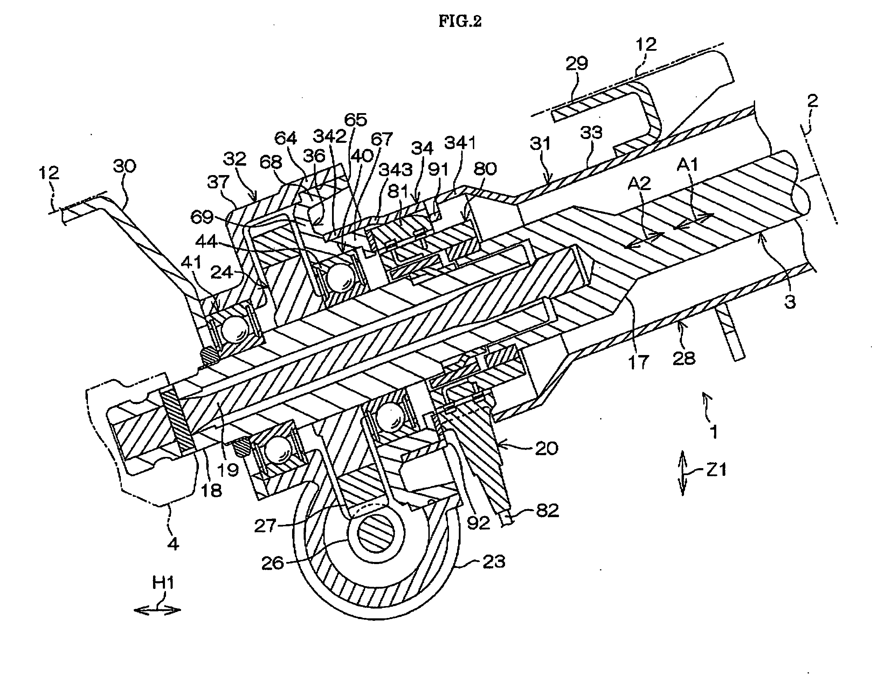

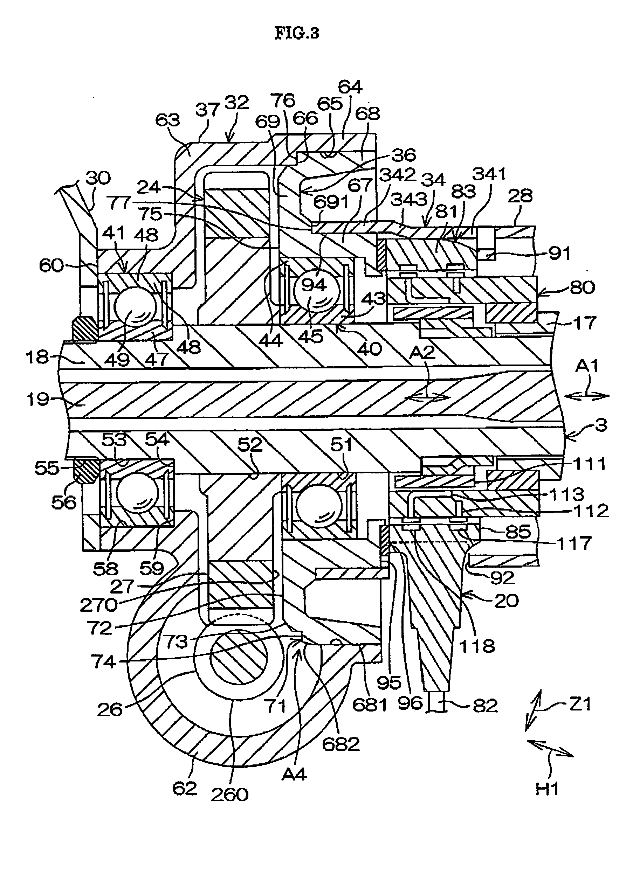

FIG. 2 is a cross-sectional view of a main portion of the electric power steering system 1 in FIG 1. As shown in FIG 2, the steering column 28 extends parallel to the axial direction A1. In addition, the steering column 28 extends in the direction oblique to the longitudinal direction H1 of the vehicle. For example, the central axis of the steering shaft 3 is set so as to be oblique to the longitudinal direction H1 so that the steering member 2 is positioned above the steering shaft 3. The up-down direction Z1 is shown in FIGs. 2 and 3.

The steering column 28 includes a column tube 31 that houses a portion of the steering shaft 3 and a gear housing 32 that houses the speed reduction mechanism 24. The column tube 31 and the gear housing 32 are formed as separate members, and then connected to each other.

The column tube 31 forms an upper portion and a middle portion of the steering column 28 in the axial direction A1. The column tube 31 is made of metal, for example, steel. The column tube 31 rotatably supports the steering shaft 3. The column tube 31 is supported by the vehicle body 12 via the first bracket 29. More specifically, the column tube 31 is fixed to the vehicle body 12 via the first bracket 29.
The column tube 31 has an upper portion 33 of the column tube 31 in the axial direction A1 and a sensor housing 34 that is a lower portion of the column tube 31 in the axial direction A1. The upper portion 33 and the sensor housing 34 are made of single material, and formed integrally with each other.
The upper portion 33 of the column tube 31 has a cylindrical shape and extends straight in the axial direction A1.

The sensor housing 34 is larger in diameter than the upper portion 33, and houses a portion of the torque sensor 20. The sensor housing 34 has a cylindrical shape, and is formed by plastically deforming the lower portion of the column tube 31 in such a manner that the diameter of the lower portion is increased. The sensor housing 34 has a first cylindrical portion 341, a second cylindrical portion 342 and a connection portion 343. The first cylindrical portion 341 forms an upper portion of the sensor housing 34 in the axial direction A1, and has a relatively small diameter. The second cylindrical portion 342 forms a lower portion of the sensor housing 34 in the axial direction A1, and is larger in diameter than the first cylindrical portion 341. The connection portion 343 connects the first cylindrical portion 341 and the second cylindrical portion 342 to each other. The first cylindrical portion 341, the second cylindrical portion 342 and the connection portion 343 are made of single material, and formed integrally with each other.
The first cylindrical portion 341 supports the torque sensor 20. The second cylindrical portion 342 is formed in a lower end portion of the column tube 31 (a lower end portion of the sensor housing 34), and is connected to the gear housing 32.

The gear housing 32 forms a lower portion of the steering column 28 in the axial direction A1. The gear housing 32 is supported by the vehicle body 12 via the second bracket 30. The gear housing 32 supports the electric motor 23.
The gear housing 32 has an upper housing 36 and a lower housing 37. The upper housing 36 and the lower housing 37 are formed as separate members, and are fitted to each other. Each of the upper housing 36 and the lower housing 37 is made of metal, for example, an aluminum alloy.

As shown in FIG 1, the electric power steering system 1 includes a bearing 39 that rotatably supports an axially-upper portion of the input shaft 17 of the steering shaft 3. The bearing 39 is supported by an upper end portion of the column tube 31 of the steering column 28.
In addition, the electric power steering system 1 includes an upper bearing 40 and a lower bearing 41 that support the output shaft 18 of the steering shaft 3.
The upper bearing 40 and the lower bearing 41 are arranged on the respective sides of the worm wheel 27 in the axial direction A1. The upper bearing 40 is arranged above the lower bearing 41 in the axial direction A1, and is supported by the upper housing 36. The lower bearing 41 is arranged below the upper bearing 40 in the axial direction A1, and is supported by the lower housing 37.

As shown in FIG. 2, the upper bearing 40 and the lower bearing 41 rotatably support the input shaft 17 of the steering shaft 3 via the output shaft 18 and the torsion bar 19. FIG. 3 is an enlarged view of the main portion in FIG 2. As shown in FIG 3, the upper bearing 40 and the lower bearing 41 are rolling bearings, and also sealed bearings. The upper bearing 40 includes an inner ring 43, an outer ring 44, and a plurality of balls 45 that serve as rolling elements. The lower bearing 41 includes an inner ring 47, an outer ring 48, and a plurality of balls 49 that serve as rolling elements.

The output shaft 18 has a first fit portion 51, a second fit portion 52, a third fit portion 53, a step portion 54, and an external thread portion 55. The inner ring 43 of the upper bearing 40 is fitted to the first fit portion 51. The worm wheel 27 is fitted to the second fit portion 52. The inner ring 47 of the lower bearing 41 is fitted to the third fit portion 53. The step portion 54 connects the second fit portion 52 and the third fit portion 53 to each other. The external thread portion 55 is located next to the third fit portion 53. A nut 56 is screwed onto the external thread portion 55.

The first fit portion 51 is tightly fitted to the inner periphery of the inner ring 43 of the upper bearing 40. A lower end face of the inner ring 43 of the upper bearing 40 contacts an upper end face of the worm wheel 27. The second fit portion 52 is press-fitted into a center hole of the worm wheel 27. Thus, the second fit portion 52 and the worm wheel 27 are fixed to each other. The inner ring 47 of the lower bearing 41 is held between the step portion 54 of the output shaft 18 and the nut 56. The third fit portion 53 is tightly fitted to the inner periphery of the inner ring 47 of the lower bearing 41.

A lower portion of the lower housing 37 in the axial direction A1 has a bearing support hole 58 used to support the lower bearing 41, and an annular step portion 59 that is located next to the bearing support hole 58. The second bracket 30 is fixed to a lower end face 60 of the lower housing 37. The outer ring 48 of the lower bearing 41 is held between the step portion 59 and the second bracket 30 while being fitted in the bearing support hole 58 of the lower housing 37. Thus, movement of the outer ring 48 relative to the gear housing 32 in the axial direction A1 is restricted.

An upper portion of the lower housing 37 in the axial direction A1 has a first cylindrical portion 62 that houses the worm 26, a second cylindrical portion 63 that houses the worm wheel 27, and a cylindrical connection portion 64 at which the lower housing 37 is connected to the upper housing 36. The connection portion 64 has an inner periphery 65 and a positioning face 66 that is formed of an annular plain face perpendicular to the axial direction A1.
In each of FIGs. 2 and 3, the central axis of the first cylindrical portion 62 extends in the direction perpendicular to the sheet on which the figure is drawn. The second cylindrical portion 63, the connection portion 64 and the steering shaft 3 are arranged concentrically with each other.

The upper housing 36 has an inner cylinder 67, an outer cylinder 68, and an annular connection wall 69 that connects the inner cylinder 67 and the outer cylinder 68 to each other. The upper housing 36 has an annular shape as a whole. In the following description concerning the upper housing 36, the circumferential direction and the radial direction of the upper housing 36 will be simply referred to as the "circumferential direction" and the "radial direction", respectively, where appropriate.
The inner cylinder 67 and the outer cylinder 68 are arranged concentrically with each other. The outer cylinder 68 is press-fitted to the inner periphery 65 of the connection portion 64 of the upper portion of the lower housing 37. The inner cylinder 67 is press-fitted to an inner periphery 94 of the second cylindrical portion 342 of the sensor housing 34. An outer periphery 681 of the outer cylinder 68 has a chamfered portion 682 that is used to guide press-fitting of the outer cylinder 68.

The inner cylinder 67 and the outer cylinder 68 both extend from the connection wall 69 upward in the axial direction A1. Thus, at least a portion of a fit portion, at which the connection portion 64 of the lower housing 37 and the outer cylinder 68 of the upper housing 36 are fitted to each other, and at least a portion of a fit portion, at which the inner cylinder 67 of the upper housing 36 and the second cylindrical portion 342 of the sensor housing 34 are fitted to each other, overlap with each other. Therefore, the length of the electric power steering system 1 in the axial direction A1 is shorter than that when the above-described fit portions are offset from each other in the axial direction A1.

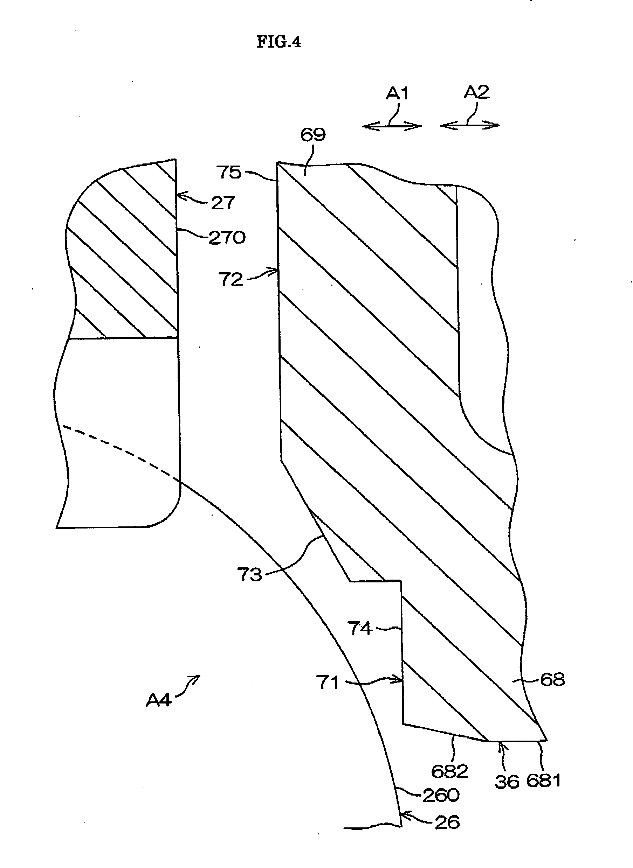

FIG 4 is an enlarged view of a section A4 shown in FIG. 3. As shown in FIGs. 3 and 4, the upper housing 36 has a first facing portion 71 that faces a peripheral face 260 of the worm 26 in the axial direction A2 of the sensor housing 34, and a second facing portion 72 that faces an end face 270 of the worm wheel 27 in the axial direction A2. The first facing portion 71 has a beveled portion 73 and a stepped portion 74 so that contact with the worm 26 is avoided.

The first facing portion 71 and the second facing portion 72 are formed in a lower end face 75 of the upper housing 36 in the axial direction A1. The first facing portion 71 is formed in the lower end face 75 at a portion in the circumferential direction, which is on the outer side of the second facing portion 72 in the radial direction. The second facing portion 72 is formed of an annular plain face perpendicular to the axial direction A1.

The beveled portion 73 and the stepped portion 74 are recessed with respect to the second facing portion 72 in the axial direction A1. The beveled portion 73 is located on the inner side of the stepped portion 74 in the radial direction, and the stepped portion 74 is located on the outer side of the beveled portion 73 in the radial direction.
The beveled portion 73 is formed of a portion of a conical face. Therefore, the beveled portion 73 is formed easily. The beveled portion 73 is oblique to the second facing portion 72, and is tapered with respect to the axial direction A1.
The stepped portion 74 is formed so as to be perpendicular to the axial direction A1, and is recessed with respect to the beveled portion 73 in the axial direction A1. The stepped portion 74 is formed of a portion of an annular plain face. Therefore, the stepped portion 74 is formed easily.

As shown in FIG. 3, a positioning face 76 is formed in the end face 75 of the upper housing 36. The positioning face 76 contacts the positioning face 66 of the connection portion 64 of the lower housing 37, thereby determining the positions of the upper housing 36 and the lower housing 37 with respect to each other in the axial direction A1.
The positioning face 76 and the stepped portion 74 are next to each other in the circumferential direction, and form a single annular plain face as a whole. Thus, it is possible to reduce the effort of forming the stepped portion 74 and the positioning face 76.
In the annular plain face formed of the stepped portion 74 and the positioning face 76, a portion of the annular plain face in the circumferential direction forms the stepped portion 74, and the remaining portion of the annular plain face forms the positioning face 76.

The inner cylinder 67 of the upper housing 36 rotatably supports the steering shaft 3 via the upper bearing 40. More specifically, the inner cylinder 67 is press-fitted to the inner periphery 94 of the second cylindrical portion 342 of the sensor housing 34, whereby the diameter of the inner cylinder 67 is reduced. As a result, the outer ring 44 of the upper bearing 40 is supported by the inner cylinder 67 with no clearance left between the outer ring 44 and the inner cylinder 67 in the radial direction (the outer ring 44 is tightly fitted to the inner cylinder 67). A lower end 77 of the second cylindrical portion 342 of the sensor housing 34 contacts an annular plain face 691 of the connection wall 69.

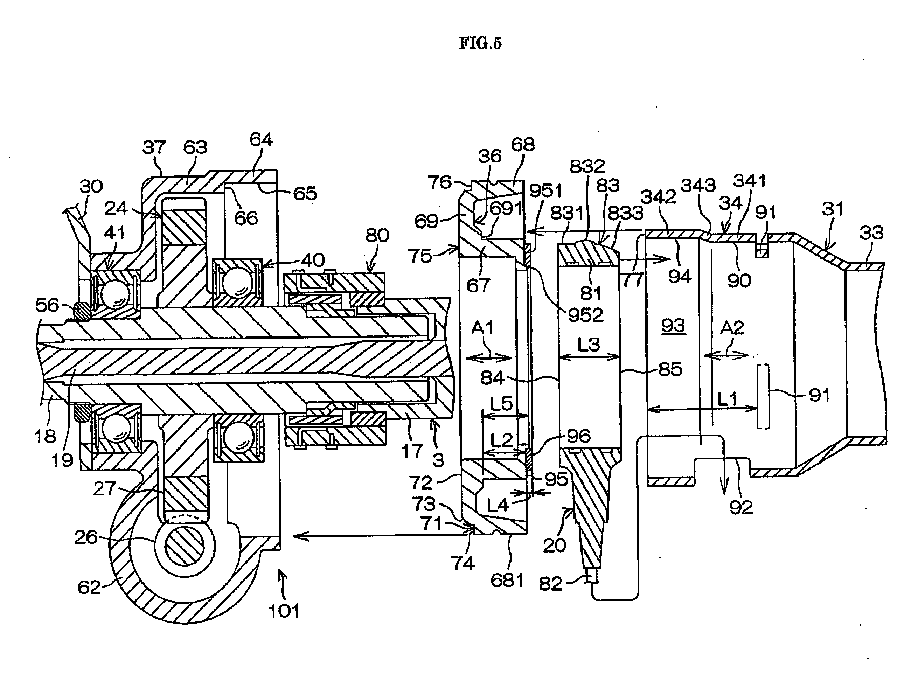

FIG. 5 is an exploded view of the main portion shown in FIG. 3. As shown in FIGs. 3 and 5, the electric power steering system 1 includes the input shaft 17, the output shaft 18, the torsion bar 19, the torque sensor 20, which have been described above, and a magnetic circuit forming member 80, so as to detect steering torque. The magnetic circuit forming member 80 includes an annular permanent magnet 111, and an annular first magnetic yoke 112 and an annular second magnetic yoke 113 that are soft magnetic members. The torque sensor 20 detects steering torque based on magnetic flux that is generated in the magnetic circuit forming member 80.

The torque sensor 20 includes an annular first magnetic flux collecting ring 117 and an annular second magnetic flux collecting ring 118 that are soft magnetic members and that collect the magnetic flux generated in the magnetic circuit forming member 80, a magnetic sensor (not shown) that includes a hall IC that detects steering torque based on the density of the collected magnetic flux, an annular main body 81 that is made of synthetic resin and that supports these members, and a wire 82 that extends from the main body 81.
The main body 81 has an outer periphery 83, and end faces 84 and 85 that are formed on respective sides the main body 81 in the axial direction A1. The wire 82 extends from a portion of the outer periphery 83 of the main body 81 outward in the radial direction. The outer periphery 83 of the main body 81 has a cylindrical portion 831 formed of a cylindrical face, a plurality of projections 832 that project from the cylindrical portion 831 outward in the radial direction, and a chamfering portion 833.

The chamfering portion 833 connects the cylindrical portion 831 and the end face 85 to each other. The chamfering portion 833 guides fitting of the main body 81 into the sensor housing 34, thereby suppressing, for example, formation of scuffing that may occur when the main body 81 is press-fitted to the sensor housing 34.
The diameter of the cylindrical portion 831 is set to a value that is slightly smaller than the value that is equal to the inner diameter of an inner periphery 90 of the first cylindrical portion 341 of the sensor housing 34.
The projections 832 are located at positions that are apart from each other in the circumferential direction of the sensor housing 34. Each of the projections 832 contacts the inner periphery 90 of the first cylindrical portion 341, and is compressed in the radial direction. Thus, it is possible to press-fit the main body 81 of the torque sensor 20 to the inner periphery 90 of the sensor housing 34 at small interference and with small force.

The first cylindrical portion 341 of the sensor housing 34 has the inner periphery 90. The main body 81 of the torque sensor 20 is fitted to the inner periphery 90 of the first cylindrical portion 341. The inner periphery 90 has a plurality of projections 91 that serve as holding portions that hold the main body 81 of the torque sensor 20. Each of the projections 91 projects from the inner periphery 90 inward in the radial direction. The projections 91 are located at positions that are apart from each other in the circumferential direction of the sensor housing 34 (which coincides with the circumferential direction B1 of the steering shaft 3). For example, the projections 91 are located at regular intervals. Note that, in FIG. 5, the intervals between the projections 91 are not regular, for convenience of illustration. Further, at least one projection 91 is required. The following description concerning the embodiment will be provided on the assumption that the projections 91 are formed at two positions.

The two projections 91 are formed at the same position in the axial direction A2 of the sensor housing 34 (which coincides with the axial direction A1 of the steering shaft 3). The two projections 91 are at a predetermined distance from the lower end 77 of the sensor housing 34.
The holding portion may be a step portion (not shown) that is formed in the inner periphery 90. The holding portion may be made of the same material as that of the inner periphery 90 and formed integrally with the inner periphery 90. Alternatively, the holding portion may be fixed to the inner periphery 90.

A single through-hole 92 is formed in the sensor housing 34. The through-hole 92 is formed so as to straddle the first cylindrical portion 341, the second cylindrical portion 342 and the connection portion 343. The torque sensor 20 passes through the through-hole 92, and the wire 82 of the torque sensor 20 extends to the outside of the sensor housing 34.
Because the first cylindrical portion 341 of the sensor housing 34 is made of steel, the material cost is lower than that when the first cylindrical portion 341 is made of an aluminum alloy. In addition, the magnetic field resistance of the torque sensor 20 is improved. That is, it is possible to suppress the influence of external noise on the torque sensor 20. Consequently, in the torque sensor 20, it is possible to omit or simplify a shield plate that is used to provide magnetic shielding.

The connection portion 343 is tapered with respect to the axial direction A1, and guides fitting of the main body 81 of the torque sensor 20 into the first cylindrical portion 341.
The second cylindrical portion 342 is formed at the lower end portion of the column tube 31, has an annular shape, and has an opening 93. The second cylindrical portion 342 has the inner periphery 94. The inner periphery 94 is larger in diameter than the inner periphery 90 of the first cylindrical portion 341. In the embodiment, the diameter of the inner periphery 94 of the second cylindrical portion 342 is equal to or larger than the diameter of the outer periphery of the first cylindrical portion 341. The outer periphery of the second cylindrical portion 342 is larger in diameter than the outer periphery of the first cylindrical portion 341.

The second cylindrical portion 342 of the sensor housing 34 made of steel holds the upper bearing 40 via the upper housing 36 made of an aluminum alloy that is softer than steel. Therefore, it is possible to suppress generation of metal noise. The above-mentioned metal noise is generated due to metal contact, and is likely to be generated when hard members, for example, steel members contact each other.

As shown in FIG. 3, the outer periphery of the inner cylinder 67 of the upper housing 36 of the gear housing 32 is press-fitted to the inner periphery 94 of the second cylindrical portion 342 of the sensor housing 34. The lower end 77 of the second cylindrical portion 342 contacts the annular plain face 691 of the connection wall 69 of the upper housing 36. Thus, the positions of the upper housing 36 and the sensor housing 34 are determined with respect to each other in the axial direction A2 of the sensor housing 34.
In this state, the main body 81 of the torque sensor 20 is fitted to the inner periphery 90 of the first cylindrical portion 341 of the sensor housing 34. Each of the projections 91 of the sensor housing 34 and the end face 85 of the main body 81 of the torque sensor 20 contact each other. An elastic member 96 is interposed between an end portion 95 of the inner cylinder 67 and the end face 84 of the main body 81 of the torque sensor 20. The elastic member 96 is elastically compressed and deformed.

The elastic member 96 has an annular shape, and has a rectangular cross section. The elastic member 96 is a rubber member. The elastic member 96 is supported by the end portion 95 of the inner cylinder 67 of the upper housing 36. Alternatively, the elastic member 96 may be supported by the main body 81 of the torque sensor 20.

As shown in FIGs. 3 and 5, the end portion 95 of the inner cylinder 67 has a portion 951 and a portion 952. The portion 951 extends from the inner periphery of the inner cylinder 67 inward in the radial direction, and holds the elastic member 96 in the axial direction A1. The portion 952 is used to determine the position of the elastic member 96 in the radial direction of the upper housing 36.
In the axial direction A1, the distance L1 between the lower end 77 of the second cylindrical portion 342 of the sensor housing 34 and the projection 91 of the first cylindrical portion 341 is set to be shorter than the sum of the distance L2 between the portion 951 of the end portion 95 of the inner cylinder 67 of the upper housing 36 and the annular plain face 691 of the connection wall 69 of the upper housing 36, the distance L3 between the end faces 84 and 85 of the main body 81 of the torque sensor 20, and the thickness L4 of the elastic member 96 in the free state (L1 < (L2 + L3 + L4)).
The distance L1 is set to be longer than the sum of the distance L2 and the distance L3 in the axial direction A1 (L1 > (L2 + L3)).
The distance L1 is set to be longer than the sum of the distance L5 between the portion 952 of the end portion 95 of the inner cylinder 67 of the upper housing 36 and the annular plain face 691 of the connection wall 69 of the upper housing 36, and the distance L3 (L1 > (L5 + L3)).

Due to the above-described dimensional relationships, the elastic member 96 is interposed between the main body 81 of the torque sensor 20 and the inner cylinder 67 of the upper housing 36, and elastically compressed. The main body 81 of the torque sensor 20 is pressed, by the elastic member 96, to the projections 91 that serve as the holding portions formed on the inner periphery 90 of the sensor housing 34. As a result, even if, for example, a dimension error of a component occurs, the main body 81 of the torque sensor 20 is always located within the sensor housing 34 in the axial direction A2.
The inner cylinder 67 is formed so as to be longer than the outer ring 44 of the upper bearing 40 in the axial direction A1 of the steering shaft 3. The outer ring 44 of the upper bearing 40 that is supported by the inner periphery of the inner cylinder 67 is arranged at a position apart from the end portion 95 of the inner cylinder 67. A clearance is formed between the upper bearing 40 and the torque sensor 20 in the axial direction A1 of the steering shaft 3.

As shown in FIG. 5, the electric power steering system 1 may be assembled, for example, according to the following procedure. First, a first subassembly' 101 is assembled. The first subassembly 101 includes the steering shaft 3, the speed reduction mechanism 24, the lower housing 37, the upper bearing 40, the lower bearing 41, the magnetic circuit forming member 80, etc. The column tube 31, the torque sensor 20 and the upper housing 36 have not been fitted to the first subassembly 101. The elastic member 96 is fitted and fixed to the upper housing 36.

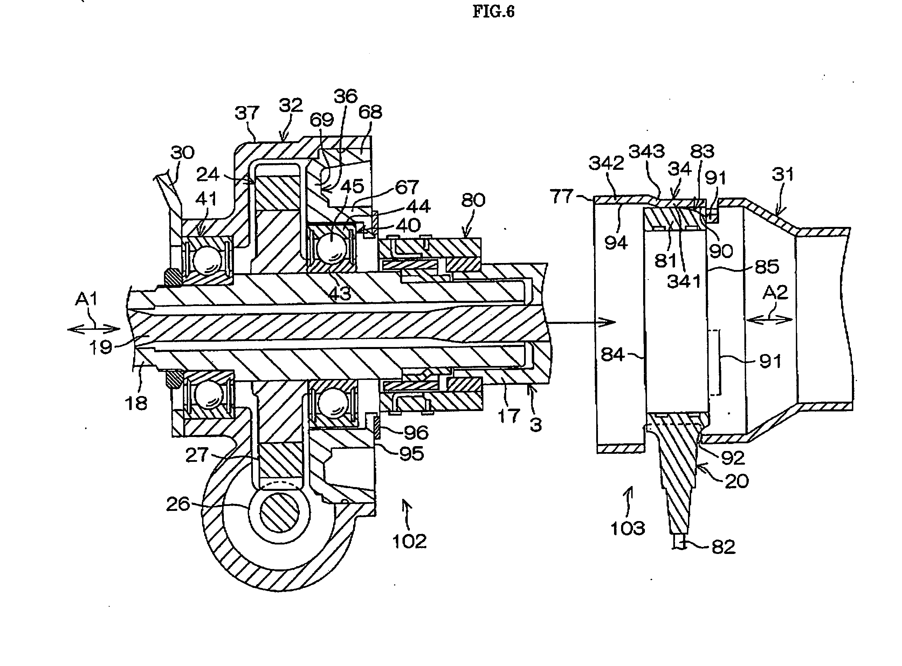

FIG. 6 is an exploded view of the main portion shown in FIG. 3, showing the state in the process of assembly. As shown in FIGs. 5 and 6, the upper housing 36 is then fitted to the first subassembly 101. Thus, a second subassembly 102 is formed. More specifically, the outer periphery 681 of the outer cylinder 68 of the upper housing 36 is press-fitted to the inner periphery 65 of the connection portion 64 of the lower housing 37. In addition, the inner periphery of the inner cylinder 67 of the upper housing 36 and the outer periphery of the outer ring 44 of the upper bearing 40 are fitted to each other.

As shown in FIG 6, the inner cylinder 67 of the upper housing 36 of the second subassembly 102 has not been fitted to the sensor housing 34. In the second subassembly 102, the inner periphery of the inner cylinder 67 of the upper housing 36 that has been press-fitted into the lower housing 37 is loosely fitted to the outer periphery of the outer ring 44 of the upper bearing 40 with a clearance left therebetween.

As shown in FIGs. 5 and 6, the torque sensor 20 is fitted to the sensor housing 34. Thus, a third subassembly 103 is formed. The third subassembly 103 has the sensor housing 34 and the torque sensor 20.
More specifically, the torque sensor 20 is placed into the sensor housing 34 from the opening 93 of the lower end 77 of the sensor housing 34, and fitted to the sensor housing 34. At this time, the wire 82 of the torque sensor 20 is placed into the sensor housing 34 from the opening 93 before the main body 81 is placed into the sensor housing 34. Then, the wire 82 is passed through the through-hole 92. Next, the main body 81 of the torque sensor 20 is fitted to the first cylindrical portion 341 of the sensor housing 34, and the main body 81 is pushed in the axial direction A1. Then, the end face 85 of the main body 81 is made to contact the two projections 91 of the sensor housing 34.

As shown in FIG 6, the third subassembly 103 is fitted to the second subassembly 102. Thus, the state shown in FIG 3 is achieved.
More specific description will be provided with reference to FIGs. 3 and 6. The outer periphery of the inner cylinder 67 is press-fitted to the inner periphery 94 of the second cylindrical portion 342 of the sensor housing 34. Thus, the diameter of the inner cylinder 67 is reduced. As a result, the inner periphery of the inner cylinder 67 and the outer periphery of the outer ring 44 of the upper bearing 40 are fitted to each other with no clearance left therebetween. Thus, the center positions of the upper housing 36, the lower housing 37 and the upper bearing 40 are concentric with each other. Therefore, it is possible to minimize the position gap between the center positions of the upper bearing 40 and the lower bearing 41. Accordingly, it is possible to suppress generation of abnormal noise due to the position gap between the center positions. In addition, it is possible to easily fit the upper bearing 40 to the inner cylinder 67 that has not been placed in the state where the diameter of the inner cylinder 67 is reduced due to the press-fitting of the inner cylinder 67 into the sensor housing 34. As a result, the production cost is further reduced.

Accordingly, the steering shaft 3 is arranged at the center position of the inner periphery of the inner cylinder 67 of the upper housing 36 via the upper bearing 40. Because the upper housing 36 and the lower housing 37 are press-fitted to each other, the upper housing 36 and the lower housing 37 are arranged concentrically with each other. Therefore, the lower housing 37 and the steering shaft 3 are arranged concentrically with each other via the upper housing 36 and the upper bearing 40. When the lower bearing 41 is fixed to the lower housing 37 in this state, the steering shaft 3 is arranged concentrically with the lower housing 37 via the lower bearing 41.
Any one of the second subassembly 102 and the third subassembly 103 may be assembled before the other. Alternatively, the second subassembly 102 and the third subassembly 103 may be assembled at the same time. The elastic member 96 needs to be fitted to the upper housing 36 before the second subassembly 102 and the third subassembly 103 are assembled together.

As described above with reference to FIG 3, the sensor housing 34 is formed by increasing the diameter of the lower portion of the column tube 31. Therefore, the sensor housing 34 and the column tube 31 may be integrated with each other. As a result, it is possible to reduce the number of components, and, consequently, it is possible to reduce the production cost. In addition, the second cylindrical portion 342 of the sensor housing 34 is larger in diameter than the first cylindrical portion 341. Therefore, it is possible to reduce the length of the second cylindrical portion 342 in the axial direction A2 of the sensor housing 34 while ensuring sufficient contact area where the second cylindrical portion 342 and the inner cylinder 67 of the upper housing 36 contact each other. Accordingly, it is possible to provide the electric power steering system 1 that is inexpensive and compact in the axial direction A1 of the steering shaft 3.

In the embodiment, the main body 81 of the torque sensor 20 is pushed against the projections 91 that serve as the holding portions and that are formed on the inner periphery 90 of the sensor housing 34 by the elastically compressed elastic member 96. As a result, the position of the main body 81 of the torque sensor 20 is determined in the axial direction A2 of the sensor housing 34. Thus, it is possible to highly accurately determine the position of the main body 81 of the torque sensor 20 with respect to the projections 91, while absorbing a dimensional variation of the components such as the main body 81 of the torque sensor 20, the upper housing 36 and the sensor housing 34. In other words, because it is possible to permit a certain level of dimensional variation of the above-described components while determining the position of the main body 81, it is possible to lower the accuracy of dimension of the above-described components. As a result, it is possible to further reduce the production cost. In addition, changes in the characteristics of the torque sensor 20, which may be caused in accordance with the pressing force applied in the axial direction A1, is prevented by the elastic member 96.

In the embodiment, it is possible to reduce the distance between the end face 270 of the worm wheel 27 and the second facing portion 72 while preventing occurrence of contact between the peripheral face 260 of the worm 26 and the first facing portion 71 by the beveled portion 73 and the stepped portion 74. It is possible to provide the electric power steering system 1 that is further compact in the axial direction A1 of the steering shaft 3. This effect is obtained if there is a portion for preventing contact between the first facing portion 71 and the peripheral face 260 of the worm 26.

If such a portion is formed, the distance between the end face 270 of the worm wheel 27 and the second facing portion 72 is reduced in the axial direction A1. Therefore, it is possible to reduce the size of the space formed between the speed reduction mechanism 24 and the inner face of the gear housing 32 in order to store a lubricant, for example, grease. As a result, the lubricant stored in this space is easily supplied to meshing portions of the worm 26 and the worm wheel 27. Therefore, the worm 26 and the worm wheel 27 are effectively lubricated even if the amount of lubricant is small.

The upper housing 36 of the gear housing 32 is press-fitted to the inner periphery 90 of the first cylindrical portion 341 of the sensor housing 34. In addition, the outer cylinder 68 of the upper housing 36 of the gear housing 32 is press-fitted to the inner periphery 90 of the first cylindrical portion 341 of the lower housing 37. As a result, it is possible to suppress an increase in the number of components for fixation, such as bolts, reduce the effort of forming a threaded portion, and reduce the effort of assembly for screw-fitting.

The following modifications of the embodiment may be implemented. In the description below, the features that are different from the features of the above embodiment will be described. The other configurations are the same as those in the above embodiment, and will not be described below.
For example, in the above-described embodiment, the beveled portion 73 and the stepped portion 74 are formed to prevent contact between the first facing portion 71 and the peripheral face 260 of the worm 26. Alternatively, one of the beveled portion 73 and the stepped portion 74 may be formed.
That is, instead of forming the beveled portion 73, the stepped portion 74 may be extended inward in the radial direction. Alternatively, instead of forming the stepped portion 74, the beveled portion 73 may be extended outward in the radial direction.

As a detecting portion of the magnetic sensor of the torque sensor 20, a magnetic resistance element that uses the magnetic resistance effect may be employed instead of a hall element. That is, a magneto-sensitive element of which the electric characteristic (for example, resistance) is changed by the effect of a magnetic field may be used. The torque sensor 20 needs to include at least one magneto-sensitive element. In addition, various modifications may be made within the scope of claims.
An electric power steering system includes a cylindrical sensor housing that houses a torque sensor, and a gear housing that houses a speed reduction mechanism. The gear housing has a cylindrical lower housing that supports a lower bearing, and an upper housing. The upper housing has an inner cylinder that supports an upper bearing, an outer cylinder that is press-fitted to the lower housing, and an annular connection wall that connects the inner cylinder and the outer cylinder to each other. The sensor housing has a first cylindrical portion that has an inner periphery to which the torque sensor is fitted, and a second cylindrical portion that is larger in diameter than the first cylindrical portion. The inner cylinder of the upper housing is press-fitted to an inner periphery of the second cylindrical portion.

## Claims

1. An electric power steering system, comprising:
a steering shaft (3) that is connected to a steering member (2);
a cylindrical sensor housing (34);
a torque sensor (20) that is housed in the sensor housing (34), and that detects steering torque;
a speed reduction mechanism (24) that is used to transmit rotation of an electric motor (23) for steering assistance to the steering shaft (3), and that includes a wheel (27) fitted to the steering shaft;
a gear housing (32) that houses the speed reduction mechanism (24); and
an upper bearing (40) and a lower bearing (41) that are arranged above and below the wheel (27), respectively, and that rotatably support the steering shaft (3),
wherein the gear housing (32) has a cylindrical lower housing (37) that rotatably supports the steering shaft (3) via the lower bearing (41), and an upper housing (36),
wherein the upper housing (36) has an inner cylinder (67), an outer cylinder (68), and an annular connection wall (69) that connects the inner cylinder (67) and the outer cylinder (68) to each other,
wherein the inner cylinder (67) rotatably supports the steering shaft (3) via the upper bearing (40), and
wherein the sensor housing (34) has a first cylindrical portion (341) that has an inner periphery to which the torque sensor (20) is fitted, and a second cylindrical portion (342) that is formed at a lower end portion of the sensor housing (34) and that is larger in diameter than the first cylindrical portion (341), and
wherein the speed reduction mechanism (24) includes a worm (26) and a worm wheel (27);
**characterized in that**
the outer cylinder (68) is press-fitted to an inner periphery (65) of an
upper portion of the lower housing (37), the inner cylinder (67) of the upper housing (36) is pass-filted to an inner periphery of the second cylindrical portion (342),
the upper housing (36) has a first facing portion (71) that faces a peripheral face (260) of the worm (26) in the axial direction of the sensor housing (34), and a second facing portion (72) that faces an end face (270) of the worm wheel (27), and
wherein a portion (73, 74) for preventing contact between the first facing portion (71) and the worm (26) is formed in the first facing portion (71).

2. The electric power steering system according to claim 1, wherein the sensor housing (34) is formed integrally with a column tube (33) that rotatably supports the steering shaft (3) connected to the steering member (2) and that is supported by a vehicle body, and is formed in a cylindrical shape by increasing a diameter of a lower portion of the column tube (3).

3. The electric power steering system according to claim 1 or 2,
wherein the torque sensor (20) has an annular main body that is fitted to the inner periphery of the first cylindrical portion (341) of the sensor housing (34); and
wherein the main body (81) of the torque sensor (20) is pushed against a holding portion (91) formed on the inner periphery of the sensor housing by an elastic member (96) that is interposed between the main body of the torque sensor (20) and the inner cylinder (67) of the upper housing (36) and that is elastically compressed, whereby a position of the main body (81) of the torque sensor (20) in an axial direction of the sensor housing (34) is determined.

## Patentansprüche

1. Elektrisches Servolenkungssystem mit:
einer Lenkwelle (3), die mit einem Lenkelement (2) verbunden ist;
einem zylindrischen Sensorgehäuse (34);
einem Momentsensor (20), der in dem Sensorgehäuse (34) aufgenommen ist und ein Lenkmoment erfasst;
einem Drehzahluntersetzungsmechanismus (24), der verwendet wird, um eine Drehung eines elektrischen Motors (23) für eine Lenkunterstützung zu der Lenkwelle (3) zu übertragen, und der ein Rad (27) hat, das an die Lenkwelle gepasst ist;
einem Getriebegehäuse (32), das den Drehzahluntersetzungsmechanismus (24) aufnimmt; und
einem oberen Lager (40) und einem unteren Lager (41), die oberhalb bzw. unterhalb des Rads (27) angeordnet sind, und die die Lenkwelle (3) drehbar stützen,
wobei das Getriebegehäuse (32) ein zylindrisches unteres Gehäuse (37) aufweist, das die Lenkwelle (3) über das untere Lager (41) drehbar stützt, und ein oberes Gehäuse (36) aufweist,
wobei das obere Gehäuse (36) einen inneren Zylinder (67), einen äußeren Zylinder (68) und eine ringförmige Verbindungswand (69) aufweist, die den inneren Zylinder (67) und den äußeren Zylinder (68) miteinander verbindet,
wobei der innere Zylinder (67) die Lenkwelle (3) über das obere Lager (40) drehbar stützt, und
wobei das Sensorgehäuse (34) einen ersten zylindrischen Abschnitt (341) aufweist, der einen inneren Rand aufweist, an den der Momentsensor (20) gepasst ist, und einen zweiten zylindrischen Abschnitt (342), der an einem unteren Endabschnitt des Sensorgehäuses (34) ausgebildet ist, und dessen Durchmesser größer als der des ersten zylindrischen Abschnitts (341) ist, und
wobei der Drehzahluntersetzungsmechanismus (24) eine Schnecke (26) und ein Schneckenrad (27) hat;
**dadurch gekennzeichnet, dass**
der äußere Zylinder (68) mittels Pressung an einen inneren Rand (65) eines oberen Abschnitts des unteren Gehäuses (37) gepasst ist,
der innere Zylinder (67) des oberen Gehäuses (36) mittels Pressung an einen inneren Rand des zweiten zylindrischen Abschnitts (342) gepasst ist,
das obere Gehäuse (36) einen ersten gerichteten Abschnitt (71) aufweist, der in der axialen Richtung des Sensorgehäuses (34) zu einer Randfläche (260) der Schnecke (26) gerichtet ist, und einen zweiten gerichteten Abschnitt (72), der zu einer Endfläche (270) des Schneckenrads (27) gerichtet ist, und
wobei ein Abschnitt (73, 74) zum Verhindern einer Berührung zwischen dem ersten gerichteten Abschnitt (71) und der Schnecke (26) in dem ersten gerichteten Abschnitt (71) ausgebildet ist.

2. Elektrisches Servolenkungssystem nach Anspruch 1, wobei das Sensorgehäuse (34) einstückig mit einem Säulenrohr (33) ausgebildet ist, das die Lenkwelle (3) drehbar lagert, die mit dem Lenkelement (2) verbunden ist, und das durch einen Fahrzeugkörper gelagert ist, und in einer zylindrischen Form durch das Erhöhen eines Durchmessers eines unteren Abschnitts des Säulenrohrs (3) ausgebildet ist.

3. Elektrisches Servolenkungssystem nach Anspruch 1 oder 2,
wobei der Momentsensor (20) einen ringförmigen Hauptkörper aufweist, der an den inneren Rand des ersten zylindrischen Abschnitts (341) des Sensorgehäuses (34) gepasst ist; und
wobei der Hauptkörper (81) des Momentsensors (20) gegen einen Halteabschnitt (91) geschoben ist, der an dem inneren Rand des Sensorgehäuses durch ein elastisches Element (96) ausgebildet ist, das zwischen dem Hauptkörper des Momentsensors (20) und dem inneren Zylinder (67) des oberen Gehäuses (36) eingefügt ist, und das elastisch zusammengedrückt wird, wodurch eine Position des Hauptkörpers (81) des Momentsensors (20) in einer axialen Richtung des Sensorgehäuses (34) bestimmt ist.

## Revendications

1. Système électrique de direction assistée, comprenant :
un arbre de direction (3) qui est accouplé à un organe de direction (2) ;
un boîtier cylindrique (34) de capteur ;
un capteur de couple (20) qui est logé dans le boîtier (34) de capteur, et qui détecte un couple de direction ;
un mécanisme (24) de réduction de vitesse qui est utilisé pour transmettre, à l'arbre de direction (3), la rotation d'un moteur électrique (23) destiné à l'assistance à la direction, et qui comprend une roue (27) montée sur l'arbre de direction ;
un boîtier d'engrenages (32) qui loge le mécanisme (24) de réduction de vitesse ; et
un palier supérieur (40) et un palier inférieur (41) qui sont agencés, respectivement, au-dessus et au-dessous de la roue (27), et qui supportent de façon mobile en rotation l'arbre de direction (3),
dans lequel le boîtier d'engrenages (32) comporte un boîtier inférieur cylindrique (37) qui supporte de façon mobile en rotation l'arbre de direction (3) via le palier inférieur (41), et un boîtier supérieur (36),
dans lequel le boîtier supérieur (36) comporte un cylindre intérieur (67), un cylindre extérieur (68), et une paroi annulaire (69) de liaison qui relie l'un à l'autre le cylindre intérieur (67) et le cylindre extérieur (68),
dans lequel le cylindre intérieur (67) supporte de façon mobile en rotation l'arbre de direction (3) via le palier supérieur (40), et
dans lequel le boîtier (34) de capteur comporte une première partie cylindrique (341) qui possède une périphérie intérieure sur laquelle est monté le capteur de couple (20), et une seconde partie cylindrique (342) qui est formée au niveau d'une partie d'extrémité inférieure du boîtier (34) de capteur et qui est d'un diamètre plus grand que la première partie cylindrique (341), et
dans lequel le mécanisme (24) de réduction de vitesse inclut une vis sans fin (26) et une roue tangente (27),
**caractérisé :**
**en ce que** le cylindre extérieur (68) est emmanché à force dans la périphérie intérieure (65) de la partie supérieure du boîtier inférieur (37) ;
**en ce que** le cylindre intérieur (67) du boîtier supérieur (36) est emmanché à force dans la périphérie intérieure de la seconde partie cylindrique (342) ;
**en ce que** le boîtier supérieur (36) possède une première partie faisant face (71) qui est en face de la face périphérique (260) de la vis sans fin (26) dans la direction axiale du boîtier (34) de capteur, et une seconde partie faisant face (72) qui est en face d'une face d'extrémité (270) de la roue tangente (27), et
dans lequel une partie (73, 74) destinée à empêcher le contact entre la première partie faisant face (71) et la vis sans fin (26) est formée dans la première partie faisant face (71).

2. Système électrique de direction assistée selon la revendication 1, dans lequel le boîtier (34) de capteur est formé d'un seul tenant avec un tube de colonne (33) qui supporte de façon mobile en rotation l'arbre de direction (3) accouplé à l'organe de direction (2) et qui est supporté par la carrosserie de véhicule, et est formée en une forme cylindrique en accroissant le diamètre de la partie inférieure du tube de colonne (3).

3. Système électrique de direction assistée selon la revendication 1 ou 2,
dans lequel le capteur de couple (20) possède un corps principal annulaire qui est emmanché dans la périphérie intérieure de la première partie cylindrique (341) du boîtier (34) de capteur, et
dans lequel le corps principal (81) du capteur de couple (20) est poussé contre une partie de maintien (91) formée sur la périphérie intérieure du boîtier de capteur au moyen d'un organe élastique (96) qui est interposé entre le corps principal du capteur de couple (20) et le cylindre intérieur (67) du boîtier supérieur (36) et qui est comprimé élastiquement, en déterminant ainsi la position du corps principal (81) du capteur de couple (20) dans la direction axiale du boîtier (34) de capteur.
